(19) Europäisches Patentamt
European Patent Office
Office européen des brevets

(11) Veröffentlichungsnummer: **0 286 009**
**A2**

(12) # EUROPÄISCHE PATENTANMELDUNG

(21) Anmeldenummer: 88105227.8

(51) Int. Cl.⁴ **B27K 3/50 , B27K 3/15**

(22) Anmeldetag: 31.03.88

(30) Priorität: 07.04.87 DE 3711680

(43) Veröffentlichungstag der Anmeldung:
12.10.88 Patentblatt 88/41

(84) Benannte Vertragsstaaten:
AT BE CH DE ES FR GB GR IT LI LU NL SE

(71) Anmelder: **HOECHST AKTIENGESELLSCHAFT**
**Postfach 80 03 20**
**D-6230 Frankfurt am Main 80(DE)**

(72) Erfinder: **Huth, Hans-Ullrich, Dr.**
**Sofienstrasse 14**
**D-6070 Langen(DE)**
Erfinder: **Braun, Helmut, Dr.**
**Königsberger Strasse 74**
**D-6239 Kriftel(DE)**
Erfinder: **König, Franz**
**Geisenheimer Strasse 93**
**D-6000 Frankfurt am Main 71(DE)**

(54) **Wässrige biozide kationische Kunststoffdispersionen und deren Verwendung als fungizide, bakterizide und algizide Ausrüstungsmittel.**

(57) Verwendung von feinteiligen bioziden wäßrigen kationischen Kunststoffdispersionen als biozide Ausrüstungsmittel für mikrobengefährdete Substrate, vorzugsweise für fungizide, bakterizide und/oder algizide Ausrüstungen. Die verwendeten Kunststoffdispersionen sind biozide kationische Kunststoffdispersionen, die durch Emulsionspolymerisation aus geeigneten Monomeren erhalten werden können und die biozide kationisch-tensioaktive quaternäre organische Ammoniumverbindungen, vorzugsweise tetra-substituierte Ammoniumverbindungen der Formel (I) und/oder Alkyl-bzw. Alkenylpyridiniumverbindungen der Formel (II),insbesondere in einer Menge von 0,1 bis 20 Gew.-%, bezogen auf das Dispersionspolymerisat, enthalten. Der mittlere Teilchendurchmesser der Polymerisatpartikel in den bioziden kationischen Kunststoffdispersionen beträgt vorzugsweise 0,02 bis 0,5 µm bei einer Kationenaktivität von 1,5 bis 600 µmol pro g Feststoff, gemessen bei pH 7, und der Feststoffgehalt der Dispersionen beträgt vorzugsweise 3 bis 40 Gew.-%. Die Verwendung der bioziden kationischen Dispersionen erfolgt vorzugsweise als Ausrüstungsmittel für den Holzschutz, für Dispersionsanstriche und für Kunststoffputze bzw. Kunstharzputze, wobei die erzielbaren bioziden Ausrüstungen überraschende biologische Langzeitwirkungen zeigen können.

EP 0 286 009 A2

# Wäßrige biozide kationische Kunststoffdispersionen und deren Verwendung als fungizide, bakterizide und algizide Ausrüstungsmittel

Die Erfindung betrifft wäßrige biozide kationische Kunststoffdispersionen und deren Verwendung als biozide Ausrüstungsmittel. vorzugsweise für den Holzschutz, für Dispersionsanstriche und für Kunstharzputze.

Viele Holzarten, darunter zahlreiche einheimische, haben nur eine geringe natürliche Dauerhaftigkeit. Vor allem bei Feuchtigkeitseinwirkung, z.B. im Einsatz außerhalb geschlossener Räume bzw. innerhalb feuchter und wenig belüfteter Räume, ist die Gefahr der Besiedlung und Zerstörung von naturbelassenem Holz durch Pilze und Mikroorganismen groß. Es hat daher nicht an Versuchen gefehlt, die Anfälligkeit von Nutzholz zu verringern. So wurden und werden noch häufig als Holzschutzmittel Lösungen bzw. Mischungen von polymeren Bindemitteln mit fungiziden Verbindungen, häufig Phenolabkömmlingen (z.B. Preventol), Polyhalogenkohlenwasserstoffen (z.B. HCH, PCP) oder Zinnverbindungen (Tributylzinnoxid) in Kombination mit organischen Lösungsmitteln eingesetzt. Nachteile dieser Systeme sind u.a. erhebliche toxikologische Bedenken hinsichtlich der Wirkstoffe, die häufige Brennbarkeit der Mittel sowie ihr starker Geruch, der einen Einsatz z.B. in Wohnräumen ausschließt oder einschränkt. Ferner der hohe Preis der Lösungsmittel und die nachteiligen Auswirkungen bei ihrer Freisetzung in die Luft auf die menschliche Gesundheit und die Umwelt. Dazu kommt noch, daß die Wirksamkeit der bisher bekannten Holzschutzmittel oft rasch nachläßt, da die bioziden Wirkstoffe trotz ihrer häufigen Wasserunlöslichkeit z.B. bei der Freibewitterung verhältnismäßig schnell ausgewaschen werden und dann infolge ihrer meist unzureichenden biologischen Abbaubarkeit die Umwelt kontaminieren können.

Ähnliche Schwierigkeiten bestehen bei der Konservierung von Dispersionsfarben und Kunstharzputzen mit üblichen bioziden Wirkstoffen. Im Unterschied zum Holzschutz geht es jedoch in den beiden letzteren Fällen um den Schutz der Beschichtung selbst, da Bestandteile des Bindemittels sowie das Polymermaterial selbst aufgrund seiner Zusammensetzung, insbesondere bei idealen Lebensbedingungen für Mikroorganismen (hohe Luftfeuchtigkeit, Wärme und eventuell genügend Licht), von vielen Schadorganismen wie Schimmelpilzen und Algen als Ernährungsgrundlage bzw. zumindest als Lebensraum unmittelbar in Anspruch genommen werden. Auch hier boten bisherige Konservierungsmittel keinen genügenden Schutz, insbesondere in feuchten Innenräumen (Badezimmer).

Die Verwendung von anionischen Kunststoffdispersionen als Bindemittel für Farben und Putze sowie zum Lasieren von Holz ist bereits bekannt. Produkte dieser Art sind umweltschonend und erfüllen die Forderung einer Holzbeschichtung auch in ästhetischer Hinsicht sehr gut. Von Nachteil ist, daß sie allein das Holz nicht genügend vor Fäulnis und Befall durch Pilze schützen können. Ein wirksamer Zusatz der oben genannten freien Wirkstoffe wie Phenolverbindungen, Polyhalogenkohlenwasserstoffe, Zinnverbindungen mit ihren schon erwähnten Nachteilen ist jedoch nur unter Schwierigkeiten möglich. Sie können z.B. für Innenanwendungen, insbesondere aus toxikologischen Gründen, nicht empfohlen werden. Sie gewähren zudem auch trotz ihrer Wasserunlöslichkeit bei Auswaschungsbeanspruchung nur kurzzeitigen Schutz.

Die Herstellung und Verwendung kationischer Polymerisatdispersionen ist ebenfalls bereits bekannt. So wird in der DE-AS 10 53 783 erstmals die Herstellung polymerisationsfähiger quaternärer, ethylenisch ungesättigter Ammoniumverbindungen und deren Einsatz als Monomere bei der Emulsions-, Lösungs-oder Blockpolymerisation beschrieben. Diese salzartigen funktionellen Monomeren können z.B. mit Vinylestern, Styrol, Acrylestern, Olefinen und auch anderen ungesättigten Verbindungen copolymerisiert werden. Wird die Polymerisation in Emulsion durchgeführt, so können oberflächenaktive Verbindungen aus der Gruppe der nichtionischen Emulgatoren, wie Fettsäurepolyglykolester Fettalkoholpolyglykolether und Alkylphenolpolyglykolether, oder kationische Tenside, wie Salze von Fettaminen oder quaternären Alkylammoniumverbindungen, eingesetzt werden. Die erhaltenen Produkte werden als Hilfsstoffe für die Textil-, Leder-und Papierindustrie sowie zur Herstellung von Filmen, Fasern, Klebemitteln und Lacken beschrieben. Über Eigenschaften bezüglich eines Einsatzes in Holzschutzmitteln wird dagegen nichts ausgesagt oder erwähnt.

Aus der DE-PS 15 46 236 ist ein Verfahren zur Herstellung von geleimten Papieren durch Behandeln von Faserstoffen oder Papierbahnen mit wäßrigen kationischen Dispersionen bekannt. Die Dispersionspolymerisate bestehen zu 20 - 60 Gew.-% aus Styrol und/oder Acrylnitril, zu 20 - 60 Gew.-% aus (Meth-)Acrylestern und zu 5 - 50 Gew.-% aus ethylenisch ungesättigten Verbindungen mit quaternärem Stickstoffatom. Die Druckschrift enthält jedoch keine Angaben über eine andere Verwendung der kationischen Polymerisatdispersionen als diejenige auf dem Papiersektor.

Bekannt ist ferner auch der Einsatz von kationischen Emulgatoren, wie z.B. Aminen, Aminoxiden oder quaternären Alkylammoniumverbindungen, als Stabilisierungskomponenten bei der Herstellung von Kunststoffdispersionen. Neben ihrer Wirksamkeit als Stabilisator bei der Emulsionspolymerisation besitzen

manche quaternären Ammoniumverbindungen (z.B. Benzalkoniumchlorid) generell per se auch keimtötende Eigenschaften, z.B. gegen Hefen, Bakterien und Schimmelpilze. Diese allgemeine Wirkung reicht jedoch bei der Verwendung solcher Produkte als Emulgatoren in den üblicherweise verwendeten Mengen nicht zu einem dauerhaften Schutz von Holz oder Dispersionsfarben bzw. -putzen, z.B. gegen Bläue-und Schimmelpilze sowie gegen Algen aus, so daß übliche kationische Dispersionen bisher keine Anwendung als wirkungsvollen Schutz von Substraten gegen Mikroorganismenbefall finden konnten.

Auch ist ein Zusatz kationischer Emulgatoren zu den bekannten anionischen Dispersionen nicht ohne weiteres möglich, weil anionische Dispersionen u.a. aus Gründen der Dispersionsstabilität im allgemeinen keine Zusätze von kationischen Emulgatoren vertragen, da letztere die Koagulation anionischer Dispersionen bewirken.

Der vorliegenden Erfindung lag daher die Aufgabe zugrunde, biozide wäßrige Kunststoffdispersionen verfügbar zu machen, die unter Überwindung der vorstehend beschriebenen Nachteile bekannter Dispersionen die Forderungen nach einfach anzuwendenden und umweltschonenden bioziden wäßrigen Kunststoffdispersionen zum Behandeln von Holz sowohl in ästhetischer als auch in fungizider, bakterizider und algizider Hinsicht erfüllen können. Darüberhinaus sollen die Dispersionen auch zur Verhinderung von mikrobiellem Befall auf Dispersionsanstrichen sowie auf Kunstharzputzen bzw. Kunststoffputzen Verwendung finden können.

Es wurde nun überraschenderweise gefunden, daß man die vorgenannten Schwierigkeiten überwinden kann, wenn man feinteilige wäßrige kationische Kunststoffdispersionen verwendet, denen bei oder nach ihrer Herstellung biozide kationisch-tensioaktive quaternäre organische Ammoniumverbindungen zugesetzt wurden.

Gegenstand der Erfindung ist daher die Verwendung von feinteiligen wäßrigen kationischen Kunststoffdispersionen als biozide Ausrüstungsmittel für mikrobengefährdete Substrate, vorzugsweise für den Holzschutz, für Dispersionsanstriche, für Kunststoffputze bzw. Kunstharzputze, und/oder zur Herstellung von Holzschutzmitteln, Dispersionsanstrichmitteln, Kunststoffputzen bzw. Kunstharzputzen, dadurch gekennzeichnet, daß die Dispersionen biozide kationisch-tensioaktive quaternäre organische Ammoniumverbindungen, vorzugsweise Verbindungen der Formel (I) und/oder (II),

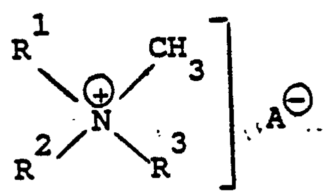 (I) ; 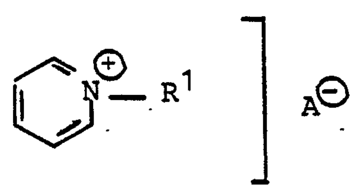 (II)

worin

$R^1$ = ($C_8$-$C_{18}$)-Alkyl oder -Alkenyl, vorzugsweise -Alkyl,

$R^2$ = ($C_8$-$C_{18}$)-Alkyl oder -Alkenyl, vorzugsweise -Alkyl, Aryl, ($C_7$-$C_{18}$)-Aralkyl, wobei die aromatischen Ringe zusätzlich substituiert sein können, vorzugsweise durch Chlor und/oder Brom,

$R^3$ = ($C_1$-$C_4$)-Alkyl, vorzugsweise Methyl, oder den Rest $-(CH_2-CHR^4O)_n-R^5$, worin n eine Zahl von 1-20, $R^4$, $R^5$, die gleich oder verschieden sein können, H und/oder ($C_1$-$C_4$)-Alkyl, $R^4$ vorzugsweise H oder Methyl und $R^5$ vorzugsweise H bedeuten, und

A = ein Anion einer organischen oder anorganischen Säure bedeutet,

enthalten.

Als Anion A kommen z.B. Chlorid, Bromid, Acetat, Propionat, Benzoat oder 1 Äquivalent Sulfat infrage.

Bevorzugt enthalten die erfindungsgemäßen bioziden kationischen Dispersionen 0.1 bis 20 Gew.-%, insbesondere 0,1 bis 10 Gew.-%, besonders bevorzugt 0,1 bis 3 Gew.-%, bezogen auf das Dispersionspolymerisat, einer oder mehrerer Verbindungen der Formel (I) und/oder (II), wobei die Partikel des Dispersionspolymerisats bzw. des Feststoffanteils der Dispersion einen mittleren Teilchendurchmesser von vorzugsweise 0,02 bis 0,5 µm, insbesondere 0,05 bis 0,2 µm, besonders bevorzugt 0,08 bis 0,15 µm, aufweisen.

Die Reste $R^1$ und $R^2$ in Formel (I) können gleich oder verschieden sein. Besondere biozide Wirksamkeit zeigen diejenigen tensioaktiven Verbindungen der Formel (I), bei denen mindestens einer der Reste $R^1$ und $R^2$ für ($C_{10}$-$C_{12}$)-Alkyl steht, oder beide Reste $R^1$ und $R^2$ ($C_{10}$-$C_{12}$)-Alkyl bedeuten.

Wirksame Verbindungen der Formel (I) bzw. (II) sind z.B. Oktyl-trimethylammoniumbromid, Decyl-trimethylammoniumchlorid, Didecyl-dimethylammoniumchlorid, Didecyl-methylhydroxyethylammonium-propionat, Lauryl-trimethylammoniumchlorid, Lauryl-pyridiniumchlorid, Hexadecyl-trimethylammoniumchlorid, Stearyl-trimethylammoniumchlorid, Stearyl-dimethylbenzylammoniumchlorid.

Insbesondere Didecyl-dimethylammoniumverbindungen zeigen in kationischen Dispersionen, denen sie entweder bereits bei der Emulsionspolymerisation oder nachträglich der fertigen kationischen Dispersion zugesetzt worden sind, besonders gut Wirksamkeit als Holzschutzmittel gegen den Befall von holzzerstörenden Pilzen und gegen Algen, wobei vor allem die geringe Auswaschbarkeit des Mittels hervorzuheben ist, was für einen langdauernden Schutz wichtig ist.

Durch den Zusatz von bioziden kationisch-tensioaktiven Verbindungen, vorzugsweise Verbindungen der Formel (I) und/oder (II), zu kationischen Kunststoffdispersionen wird die Gesamtkationenaktivität der letzteren erhöht. So beträgt bei den erfindungsgemäß zu verwendenden bioziden Dispersionen der Kationenaktivitätsanteil aus den bioziden kationisch-tensioaktiven Verbindungen z.B. der Formel (I) und/oder (II) im allgemeinen 5 bis 95 %, vorzugsweise 15 bis 50 %, bezogen auf die Gesamtkationenaktivität der erfindungsgemäß gebrauchsfertigen Dispersionen.

Die Herstellung der den erfindungsgemäßen bioziden kationischen Kunststoffdispersionen zugrunde liegenden wäßrigen feinteiligen kationischen Ausgangsdispersionen erfolgt vorzugsweise durch übliche Emulsionspolymerisation oder Emulsionscopolymerisation. Der Zusatz biozider kationisch-tensioaktiver Verbindungen, vorzugsweise Verbindungen der Formel (I) und/oder (II), kann dabei auf verschiedene Weise erfolgen, und zwar

1. Die bioziden kationisch-tensioaktiven Verbindungen, vorzugsweise Verbindungen der Formel (I) und/oder (II), werden als Emulgatoren bei der Emulsionspolymerisation nach dem Batch-oder dem Zudosierungsverfahren eingesetzt. Dabei können sie, je nach gewünschtem Eigenschaftsprofil der Dispersion (z.B. Partikelgrößenbereich, Kationenaktivität), entweder insgesamt in der wäßrigen Flotte vorgelegt oder nur anteilig vorgelegt werden, wobei im letzteren Fall der Rest dann parallel mit der Monomerzugabe zudosiert wird, so daß ihre Gesamtkonzentration, bezogen auf die Gesamtmonomerenmenge, 0,1 bis 20 Gew.-%, vorzugsweise 0,1 bis 10 Gew.-%, insbesondere 0,1 bis 3 Gew.-%, beträgt. Daneben können auch noch andere kationische Tenside in untergeordneten Mengen sowie gegebenenfalls auch nichtionogene und/oder amphotere Emulgatoren mitverwendet werden. Kationische Comonomere werden nicht mitverwendet, wenn kationisch-tensioaktive biozide Verbindungen, vorzugsweise Verbindungen der Formel (I) und/oder (II), als Emulgatoren eingesetzt werden.

Eine bevorzugte Ausführungsform der Erfindung besteht darin, daß die bioziden kationischen Kunststoffdispersionen Dispersionspolymerisate enthalten, deren Makromoleküle Monomereinheiten (berechnet in Gew.-%, bezogen auf das Polymerisat) aus folgenden Monomergruppen einpolymerisiert enthalten:

a) 80-99 Gew.-% ethylenisch ungesättigte Monomere aus der Gruppe Vinylester, (Meth-)Acrylester, Vinylaromaten, Vinylchlorid, Ethylen, (Meth-)Acrylnitril, Diester von Maleinsäure und/oder Fumarsäure, und

b) 1-20 Gew.-% ethylenisch ungesättigte hydrophile Monomere mit einer oder mehreren funktionellen Gruppen wie -OH, -COOH, $-CONR^1R^2$, wobei $R^1$ und $R^2$ gleich oder verschieden sein können und für H oder $-CH_2OR$ mit R = H oder $(C_1-C_8)$-Alkyl stehen.

2. Die bioziden kationisch-tensioaktiven Verbindungen, vorzugsweise Verbindungen der Formel (I) und/oder (II), werden nachträglich einer bereits fertigen kationischen Kunststoffdispersion bis zu einem Gesamtgehalt von 0,1 bis 20 Gew.-%, vorzugsweise 0,1 bis 10 Gew.-%, insbesondere 0,1 bis 3 Gew.-%, bezogen auf den Feststoffgehalt der Dispersion, zugesetzt. Die Verbindungen der Formel (I) und/oder (II), die meist in Form von konzentrierten wäßrigen Lösungen, gegebenenfalls aber auch in hydroxylgruppenhaltigen Lösungsmitteln vorliegen, werden vor ihrer Einarbeitung in die wäßrige Dispersion bevorzugt mit Wasser verdünnt, um ihre Einarbeitung zu erleichtern. Die Kationenaktivität der verwendeten Ausgangsdispersion kann dabei durch folgende Faktoren bedingt sein, nämlich:

a) Das Vorhandensein kationischer Emulgatoren und/oder kationischer Schutzkolloide, die bei der Emulsionspolymerisation verwendet wurden und vorzugsweise Aminogruppen und/oder Ammoniumgruppen als kationische Ladungsträger enthalten. Es können bei der Emulsionspolymerisation auch bereits kationisch-tensioaktive biozide Verbindungen, vorzugsweise Verbindungen der Formel (I) und/oder (II), in einer Menge von vorzugsweise 0,1 bis 10 Gew.-%, bezogen auf die Gesamtmonomerenmenge, als Emulgator mitverwendet worden sein, wobei in der resultierenden Dispersion die bioziden Eigenschaften dieser Verbindungen im wesentlichen erhalten bleiben.

Als übliche kationische Emulgatoren werden z.B. verwendet: Höhere primäre, sekundäre und tertiäre Fettamine und/oder deren Salze, Fettaminoxethylate, quaternäre Ammoniumsalze von Fettaminoxethylaten oder tertiären Alkylaminen und quaternären Alkylammoniumverbindungen auf Fettaminbasis.

Als übliche kationische Schutzkolloide werden gegebenenfalls z.B. verwendet: Polymere mit Amino-oder

Ammoniumgruppen, wie z.B. kationischer Polyvinylalkohol, kationische Polysaccharide (z.B. kationische Stärke, Chitosan) und kationische Polyelektrolyte (z.B. Poly-diallyldimethylammoniumchlorid). Diese als Dispersionsstabilisatoren dienenden Emulgatoren und Schutzkolloide können einzeln oder in Kombination eingesetzt werden, wobei zwecks Erzielung der erforderlichen Feinteiligkeit der Dispersion jedoch der Anteil der kationischen Emulgatoren stets überwiegen sollte. Daneben können bei der Emulsionspolymerisation auch nichtionische und/oder amphotere tensioaktive Verbindungen mitverwendet werden. Bevorzugt können die kationischen Ausgangsdispersionen gegebenenfalls z.B. 0 bis 2,5 Gew.-% kationische Schutzkolloide, 0,1 bis 5 Gew.-% kationischen Emulgator und 0 bis 2 Gew.-% weitere tensioaktive Verbindungen enthalten, jeweils bezogen auf den Polymerisatanteil in der Dispersion.

b) Das Vorhandensein kationischer Comonomereinheiten in Dispersionspolymerisaten, wie sie bei der Emulsionscopolymerisation unter Mitverwendung von kationischen Comonomeren üblicherweise erhalten werden. Geeignete kationische Comonomere sind vorzugsweise $\alpha,\beta$-ethylenisch ungesättigte copolymerisationsfähige Verbindungen, die primäre, sekundäre oder tertiäre Aminogruppen enthalten, wie z.B. Dimethylaminoethylmethacrylat, Dimethylaminoneopentylacrylat, Dimethylaminopropylmethacrylat, tert.-Butylaminoethylmethacrylat u.a., bzw. deren organische oder anorganische Salze, und/oder Alkylammoniumverbindungen, wie z.B. Trimethylammoniumethylmethacrylat-chlorid, $\beta$-Acetamidodiethylaminoethylacrylat-chlorid, Methacrylamidopropyltrimethylammonium-chlorid, Diallyldimethylammonium-chlorid u.a.. Zur Stabilisierung der Dispersion genügen im allgemeinen vorzugsweise 0,1 bis 20 Gew.-%, insbesondere 0,1 bis 10 Gew.-%, bezogen auf die Gesamtmonomerenmenge, an kationischen Comonomeren, wobei bei den letzteren der Anteil an quaternisierten Verbindungen dann überwiegen sollte, wenn bei der Herstellung der Dispersionen auf Emulgatoren und/oder Schutzkolloide verzichtet wird. Um jedoch zu den anwendungstechnisch vorteilhaften feinteiligen Dispersionen zu gelangen, werden zur Herstellung von kationische Monomereinheiten enthaltenden Dispersionscopolymerisaten durch Emulsionspolymerisation vorzugsweise nichtionische Emulgatoren und gegebenenfalls Schutzkolloide eingesetzt, und zwar in einer Konzentration von vorzugsweise 0,01 bis 10 Gew.-% Emulgator, insbesondere 0,01 bis 5 Gew.-%, bezogen auf die Gesamtmonomerenmenge. In solchen Fällen kann der kationische Comonomerenanteil mit Aminogruppen größer sein als derjenige mit quaternisierten Verbindungen, und die Gesamtkonzentration an kationischen Comonomeren beträgt dann vorzugsweise 0,1 bis 5 Gew.-%, bezogen auf die Gesamtmonomerenmenge.

Eine bevorzugte Ausführungsform der Erfindung besteht darin, daß die bioziden kationischen Kunststoffdispersionen Dispersionspolymerisate enthalten, die in Abwesenheit von kationisch-tensioaktiven bioziden Verbindungen bzw. von kationischen Emulgatoren, insbesondere von bioziden Verbindungen der Formel (I) und/oder (II), durch Emulsionspolymerisation hergestellt worden sind und deren Makromoleküle Monomereinheiten (berechnet in Gew.-%, bezogen auf das Polymerisat) aus folgenden Monomergruppen einpolymerisiert enthalten:

a) 80-99 Gew.-% ethylenisch ungesättigte Monomere aus der Gruppe Vinylester, (Meth-)Acrylester, Vinylaromaten, Vinylchlorid, Ethylen,(Meth-)Acrylnitril, Diester von Maleinsäure und/oder Fumarsäure.

b) 0-19,5 Gew.-% ethylenisch ungesättigte hydrophile Monomere mit einer oder mehreren funktionellen Gruppen wie -OH, -COOH, $-CONR^1R^2$, wobei $R^1$ und $R^2$ gleich oder verschieden sein können und für H oder $-CH_2OR$ mit R = H oder $(C_1-C_8)$-Alkyl stehen, und

c) 0,5-20 Gew.-% Amino-und/oder Ammoniumgruppen enthaltende ethylenisch ungesättigte Monomere, von denen mindestens 5 % eine quaternäre Ammoniumgruppe enthalten.

Kationische Dispersionen, die gegebenenfalls durch Emulsionspolymerisation mit kationischen Comonomeren unter zusätzlicher Mitverwendung von kationischen Emulgatoren hergestellt worden sind, sind nicht erfindungsgemäß und liegen außerhalb des Anmeldungsgegenstandes.

Bei der Herstellung der erfindungsgemäß zu verwendenden Dispersionen durch Emulsionspolymerisation werden als nichtkationische Monomerkomponenten bevorzugt copolymerisationsfähige, ethylenisch ungesättigte Verbindungen eingesetzt, wie sie auch zur Herstellung herkömmlicher Bindemitteldispersionen eingesetzt werden können, wie Vinylester von $(C_1-C_{18})$-Carbonsäuren, z.B. Vinylacetat, Vinylpropionat, Vinylversatat, Vinyllaurat, Vinylstearat; (Meth-)Acrylester von $(C_1-C_8)$-Alkoholen, z.B. Methylmethacrylat, Butylmethacrylat, Oktylmethacrylat, Ethylacrylat, Isobutylacrylat, 2-Ethylhexylacrylat; Vinylaromaten wie Styrol, Vinyltoluol; Vinylchlorid, Ethylen, (Meth-)Acrylnitril, Diester von Maleinsäure und/oder Fumarsäure. Die Monomeren können sowohl einzeln als auch in Mischung verwendet werden. Vorzugsweise werden diejenigen Monomeren eingesetzt, die zu verseifungsbeständigen und stabilen Dispersionspolymerisaten führen. Üblicherweise richtet man sich bei der Auswahl der Monomeren bzw. deren Mischungsverhältnissen nach den gewünschten anwendungstechnischen Eigenschaften der Dispersion, wobei zu deren Einstellung die dem Fachmann bekannten üblichen Auswahlkriterien Geltung finden können. Insbesondere sollte die

minimale Filmbildungstemperatur (MFT) der Kunststoffdispersionen unterhalb des Bereichs oder höchstenfalls innerhalb des Bereichs der vorgesehenen Anwendungstemperaturen, d.h. vorzugsweise zwischen 0 und 80°C, insbesondere zwischen 0 und 40°C, liegen. Werden Polymerisate mit härterer Einstellung verwendet, so können zum Erreichen der erforderlichen MFT Filmbildungshilfsmittel oder äußere Weichmacher eingesetzt werden. Sind solche Zusätze nicht erwünscht, so sollte die MFT der kationischen Dispersion vorzugsweise im Bereich von 0 bis 25°C liegen. Folgende Monomerkombinationen eignen sich in Kombination mit kationischen Monomeren oder aber in Kombination mit kationischen Emulgatoren und gegebenenfalls Schutzkolloiden z.B. ganz besonders in den nachstehend angegebenen Gewichtsverhältnissen (GT = Gewichtsteile) für die Herstellung wäßriger kationischer Dispersionen im Sinne der Erfindung:

Butylacrylat Methylmethacrylat 10-90 GT 90-10 GT
Butylacrylat Styrol 10-90 GT 90-10 GT
Oktylacrylat Methylmethacrylat 5-80 GT 95-20 GT
Oktylacrylat Styrol 5-80 GT 95-20 GT
Vinylacetat Butylacrylat 40-80 GT 60-20 GT
Vinylacetat Vinylversatat 50-80 GT 50-20 GT

Hinsichtlich des Eigenschaftsbildes der erfindungsgemäß zu verwendenden kationischen Polymerisatdispersionen kann es in manchen Fällen vorteilhaft sein, bei der Emulsionscopolymerisation noch weitere Comonomere zu verwenden, und zwar z.B. ethylenisch ungesättigte hydrophile Verbindungen mit einer oder mehreren funktionellen Gruppen wie -OH, -COOH, $-CONR^{'}R^{2}$, wobei R' und $R^2$ gleich oder verschieden sein können und für H oder $-CH_2OR$ mit R = H oder $(C_1-C_8)$-Alkyl stehen. Comonomere dieser Art werden gegebenenfalls in Mengen von vorzugsweise 1 bis 20 Gew.-%, insbesondere 1 bis 5 Gew.-%, bezogen auf die gesamte Monomerenmenge, eingesetzt.

Bevorzugte Verbindungen aus dieser Gruppe sind z.B. Hydroxyethylmethacrylat, Hydroxypropylmethacrylat, Polyhydroxypropylmethacrylat, Hydroxyethylacrylat, Hydroxypropylacrylat, Polyhydroxypropylacrylat, Methacrylsäure, Acrylsäure, Maleinsäure, Fumarsäure, Itakonsäure sowie die Halbester der drei letzteren Verbindungen, Methacrylamid, Acrylamid, N-Methylolmethacrylamid, N-Methylolacrylamid, Vinylpyrrolidon.

Bei der Verwendung von ungesättigten Carbonsäuren ist es wichtig, daß deren Anteil 5 Gew.-% nicht übersteigt und vorzugsweise im Bereich zwischen 0 und 2 Gew.-%, bezogen auf die Gesamtmenge aller Monomeren, liegt. Darüber hinaus darf das Zeta-Potential der resultierenden Dispersion keinesfalls in den negativen Bereich fallen.

Zur Einstellung der gewünschten Feinteiligkeit der Dispersion (mittlere Partikelgröße vorzugsweise 0,02 bis 0,5 µm, besonders bevorzugt 0,05 bis 0,2 µm, insbesondere 0,08 bis 0,15 µm) werden bei der Emulsionspolymerisation vorzugsweise kationische und/oder nichtionische und/oder amphotere tensioaktive Emulgatoren in einer Menge von 0,1 bis 20 Gew.-%, vorzugsweise 0,1 bis 10 Gew.-%, insbesondere 1 bis 5 Gew.-%, bezogen auf die gesamte Monomerenmenge, in üblicher Weise verwendet. Es hat sich gezeigt, daß die in den kationischen Dispersion erfindungsgemäß benötigten Mengen dieser Emulgatoren die Wasserfestigkeit von Beschichtungen, Ausrüstungen, Grundierungen und Imprägnierungen überraschenderweise nicht nachteilig beeinflussen.

Als Emulgatoren kommen bevorzugt übliche nichtionische Tenside, z.B. aus der Gruppe der Umsetzungsprodukte von aliphatischen, cycloaliphatischen, araliphatischen, aliphatischaromatischen, aromatischen Carbonsäuren, Alkoholen, Phenolen, Aminen mit Epoxiden, wie z.B. Ethylenoxid, sowie Blockcopolymerisate aus verschiedenen Epoxiden, wie z.B. Ethylenoxid und Propylenoxid, zur Anwendung. Weitere bevorzugte Emulgatoren sind z.B. primäre, sekundäre und tertiäre Fettamine in Kombination mit organischen oder anorganischen Säuren sowie außerdem tensioaktive quaternäre Alkylammoniumverbindungen. Darüber hinaus können in manchen Fällen auch amphotere Tenside mit zwitterionischer Struktur, beispielsweise vom Betaintyp, wie z.B. Alkylamidopropylbetaine, vorteilhaft sein. Die genannten Emulgatoren können sowohl einzeln als auch in Kombination untereinander oder miteinander in üblicher Weise verwendet werden. Auch anionische Emulgatoren können in begrenzter Menge bei der Emulsionspolymerisation anwesend sein. Vorzugsweise werden jedoch keine anionischen Emulgatoren verwendet. Bei ihrer Verwendung darf ihr Gehalt gegebenenfalls aber lediglich solchermaßen sein, daß die Dispersionsstabilität keine Störungen erleidet, und die Dispersionspartikel dürfen nicht zu einem negativen Zeta-Potential umgeladen werden.

Gegebenenfalls können bei der Herstellung der kationischen Dispersionen auch bekannte Schutzkolloide mitverwendet werden, und zwar bevorzugt solche auf der Basis von hochmolekularen organischen Verbindungen, die wasserlöslich oder wasserdispergierbar sind, dabei im wesentlichen keine oder keine ausgeprägte Grenzflächenaktivität entfalten und ein ausgeprägtes Dispergiervermögen besitzen. Bevorzugte Schutzkolloide sind solche von nichtionogener oder kationischer Struktur, wie z.B. Zelluloseäther,

Polyvinylalkohole. Polysaccharide. Polyvinylpyrrolidone. wobei diese Verbindungen bevorzugt durch Aminogruppen oder quaternäre Ammoniumgruppen substituiert sein können. Die letzteren Gruppen können z.B. durch Substitution mittels Kationisierungsreagenzien. wie z.B. Glycidyltrimethylammoniumchlorid. in die zugrundeliegenden Makromoleküle eingeführt werden. Kationische Polyvinylalkohole können z.B. auch durch Verseifen entsprechender amino-und oder ammoniumgruppenhaltiger Vinylacetatcopolymerisate erhalten werden. Die zu verwendenden Schutzkolloidmengen richten sich nach den gewünschten Dispersionseigenschaften, insbesondere der Feinteiligkeit der Dispersionspartikel. Höhere Schutzkolloidmengen wirken der gewünschten Feinteiligkeit der Dispersion im allgemeinen entgegen. Bevorzugt werden daher bei der Emulsionspolymerisation, wenn überhaupt. gegebenenfalls Schutzkolloidmengen zwischen 0 und 5 Gew.-%, insbesondere zwischen 0,1 und 2 Gew.-%. bezogen auf die Gesamtmonomerenmenge. verwendet.

Zur Auslösung der Polymerisation bzw. Copolymerisation können alle in der Emulsionspolymerisation üblichen, vorzugsweise wasserlöslichen, und Radikalketten initiierenden Systeme, die auch anionischer Natur sein können, verwendet werden. Bevorzugte Initiatoren sind z.B. 2,2'-Azobis(2-amidinopropan)-dihydrochlorid, 2,2'-Azobis(N.N'-dimethylenisobutyramidin)-dihydrochlorid, 4,4'-Azobis-(4-cyanovaleriansäure), $H_2O_2$, t-Butylhydroperoxid, Persulfate wie Ammoniumpersulfat, Natriumpersulfat, Kaliumpersulfat, Redox-Systeme wie $H_2O_2$ und Ascorbinsäure, Peroxide und mehrwertige Metallsalze. t-Butylhydroperoxid und Rongalit, wobei Redox-Systeme vor allem zur Senkung des Restmonomerengehaltes in der Nachreaktionsphase der Polymerisation vorteilhaft sein können, ferner energiereiche Strahlung sowie übliche Photoinitiatoren.

Zur Molekulargewichtssteuerung können bei der Emulsionspolymerisation auch übliche Regler, wie z.B. Merkaptane oder Halogenkohlenwasserstoffe zur Mokekulargewichtserniedrigung, oder aber, gegebenenfalls bis zu 5 Gew.-%, bezogen auf die Gesamtmonomerenmenge, mehrfach ethylenisch ungesättigte oder mehrfachfunktionelle und zur Vernetzung befähigte Verbindungen, wie z.B. Divinylbenzol, Ethylenglykoldimethacrylat, Ethylenglykoldiacrylat, Butandioldimethacrylat, Butandioldiacrylat, Triallylcyanurat, Melamin, Isocyanatoethylmethacrylat zur Molekulargewichtserhöhung verwendet werden.

Die wäßrigen kationischen feinteiligen Kunststoffdispersionen werden für die erfindungsgemäße Anwendung als biozides Ausrüstungsmittel bzw. Bindemittel bzw. Grundierungs-oder Imprägnierungsmittel zunächst auf den erfindungsgemäßen Gehalt an bioziden kationisch-tensioaktiven Verbindungen, vorzugsweise Verbindungen der Formel (I) und/oder (II), gebracht, im allgemeinen durch Einmischen wäßriger Verdünnungen dieser bioziden Verbindungen, falls diese nicht bereits bei der Emulsionspolymerisation als Emulgator in der für die erfindungsgemäße biozide Wirksamkeit erforderlichen Menge eingesetzt worden sind, und es wird der Feststoffgehalt der Dispersionen vorzugsweise auf Werte von 3 bis 40 Gew.-%, insbesondere 5 bis 20 Gew.-%, bezogen auf die Dispersion, eingestellt. In diesen bevorzugten Feststoffkonzentrationsbereichen besitzen die bioziden kationischen Dispersionen eine niedrige Viskosität und ein hohes Eindringvermögen in poröse Substrate sowie ein gutes Filmbildevermögen und ein gutes adhesives Bindevermögen; sie entwickeln praktisch keinen störenden Schaum und lassen sich sehr vorteilhaft verarbeiten. Die Dispersionen besitzen eine sehr gut Stabilität, auch bezüglich der Konstanz ihrer Teilchengrößenverteilung.

Die Kationenaktivität der kationischen Dispersionen steigt im allgemeinen mit steigendem Gehalt an kationisch tensioaktiven Verbindungen. Die Messung der Kationenaktivität kann z.B. titrimetrisch in bekannter Weise erfolgen (vgl. W. Schempp und H.T. Trau, Wochenblatt für Papierfabrikation 19, 1981, S. 726-732, oder J.P. Fischer und K. Löhr, Organic Coatings Science Technology, Vol. 8, S. 227-249, Marcel Dekker, Inc., April 1986).

Die kationischen Ausgangsdispersionen besitzen im allgemeinen eine Kationenaktivität zwischen 1,5 und 600 µmol pro g Feststoff, vorzugsweise zwischen 1,5 und 150 µmol/g Feststoff. Nach erfolgter Zugabe der bioziden kationisch-tensioaktiven Bestandteile, vorzugsweise Verbindungen der Formel (I) und/oder (II), wobei die Zugabe entweder bereits als Emulgator bei der Emulsionspolymerisation und/oder nachträglich durch Einmischen in die fertige kationische Dispersion in erfindungsgemäßen Mengen erfolgen kann, besitzen die erfindungsgemäß zu verwendenden bioziden kationischen Dispersionen im allgemeinen eine Gesamtkationenaktivität im Bereich von 1,5 bis 600 µmol/g Feststoff, vorzugsweise 10 bis 300 µmol/g Feststoff. Vorzugsweise entfallen 5 bis 95 % der Gesamtkationenaktivität erfindungsgemäßer biozider kationischer Dispersionen auf biozide kationische Verbindungen, vorzugsweise Verbindungen der Formel (I) und/oder (II). Es hat sich ferner gezeigt, daß vergleichbare Mengen biozider Verbindungen der Formel (I) und/oder (II) in den erfindungsgemäßen bioziden kationischen Dispersionen eine stärkere und effektivere biozide Wirksamkeit entfalten können, wenn sie einer fertigen kationischen Dispersion nachträglich zugemischt wurden, anstatt sie bereits bei der Emulsionspolymerisation als Emulgator in die Dispersion einzubringen. Wesentlich für die biozide Wirksamkeit der erfindungsgemäßen kationischen Dispersionen ist neben

der Höhe des durch das kationische Biozid z.B. der Formel (I) oder (II) bedingten Kationenaktivitätsanteils u.a. außerdem auch das jeweilige spezifische biozide Wirkungsspektrum der einzelnen verwendeten Verbindungen der Formel (I) und/oder (II) bzw. der Anteil solcher Verbindungen in Gemischen biozider kationisch-tensioaktiver Wirkstoffe.

Bekanntlich können verschiedene Biozide beispielsweise der Formel (I) oder (II) z.B. stärker fungizid oder stärker algizid oder stärker bakterizid wirken als andere biozide Verbindungen der Formel (I) oder (II).

Bei denjenigen erfindungsgemäßen bioziden kationischen Dispersionen, die bevorzugt zur Herstellung von fungiziden und algiziden Beschichtungen bzw. Grundierungen oder Putzen eingesetzt werden, kann die Gesamtkationenaktivität vorzugsweise im Bereich von 10 bis 75 µmol/g Feststoff liegen, wobei bevorzugt 50 bis 95 % dieser Gesamtkationenaktivität von Verbindungen der Formel (I) und/oder (II) herrühren sollten.

Bei denjenigen bioziden kationischen Dispersionen, deren Ausgangsdispersion durch Emulsionspolymerisation in Abwesenheit von bioziden kationischen Emulgatoren, insbesondere solchen der Formel (I) und/oder (II), hergestellt und die letzteren dann der fertigen kationischen Ausgangsdispersion nachträglich zugemischt wurden, kann die Gesamtkationenaktivität der erfindungsgemäßen Dispersion vorzugsweise um 5 bis 300 µmol/g Feststoff, insbesondere 15 bis 150 µmol/g Feststoff, über dem Kationenaktivitätswert der kationischen Ausgangsdispersion liegen.

Bei den erfindungsgemäß verwendbaren bioziden kationischen Dispersionen bleiben alle wesentlichen vorteilhaften Eigenschaften, wie sie von kationischen Kunststoffdispersionen bekannt sind, erhalten, z.B. ihre einfache Herstellbarkeit und unproblematische Handhabung, ihre Unbrennbarkeit, Ungiftigkeit und Umweltfreundlichkeit. Die biozide Wirksameit der Verbindungen der Formel (I) und/oder (II) wird durch die Gegenwart der Dispersionspolymerisatbestandteile praktisch nicht beeinträchtigt und die letzteren verringern außerdem u.a. wegen ihrer guten Verträglichkeit mit den bioziden Wirkstoffen deren Auswaschbarkeit und verlängern dadurch die Wirkungsdauer. Da die erfindungsgemäßen bioziden wäßrigen Dispersionen vorzugsweise keine weiteren Lösungsmittel enthalten, sind sie wegen ihrer toxikologischen Unbedenklichkeit und ihrer weitgehenden Geruchsneutralität besonders auch für Anwendungen in Innenräumen geeignet.

Die Erfindung wird durch die nachfolgenden Beispiele näher erläutert.

**Beispiel 1**

In einem 2 l Rührreaktor werden 1179,7 g entsalztes Wasser, (E-Wasser), 4,88 g Laurylpyridiniumchlorid (LPC) (= 0,7 Gew.-%, bezogen auf die Gesamtmonomerenmenge) sowie 10 % einer Mischung aus 439,8 g Butylacrylat (BA), 243,8 g Methylmethacrylat (MMA) und 9,75 g Hydroxyethylmethacrylat (HEMA) vorgelegt und auf 80°C erwärmt. Nach Zugabe von 1,95 g 4,4'-Azo-bis-(4-cyanovaleriansäure) (AVS) als Initiator wird 15 Minuten vorpolymerisiert. Anschließend wird der Rest der Monomerenmischung innerhalb von 2 Stunden zudosiert. Nach Zugabe von 0,49 g AVS wird 1 Stunde bei 80°C nachreagieren lassen und die Dispersion auf Raumtemperatur abgekühlt. Man erhält eine feinteilige kationische und erfindungsgemäß biozide Dispersion mit einer Kationenaktivität von 12 µmol/g Feststoff (FS), gemessen bei pH 7, einem mittleren Teilchendurchmesser von 0,268 µm und einem FS-Gehalt von 29,5 Gew.-%. Der pH-Wert der Dispersion liegt bei 3,1.

**Beispiel 2**

Beispiel 1 wird wiederholt mit der Abänderung, daß zusätzlich 9,75 g Methacrylamidopropyltrimethylammoniumchlorid (MAPTAC) in die Vorlage gegeben werden und daß anstelle von 4,88 g LPC 4,88 g iso-Tridecylalkoholpolyglykolether (mit 15 Ethylenoxideinheiten (= 15 AeO)) als Emulgator eingesetzt werden. Man erhält eine feinteilige kationische Dispersion mit einem mittleren Teilchendurchmesser von 0,186 µm, einer Kationenaktivität von 8 µmol/g FS, gemessen bei pH 7, und einem FS-Gehalt von 29,3 Gew.-%. Der so erhaltenen kationischen Ausgangsdispersion werden anschließend 1 Gew.-%, bezogen auf den FS-Gehalt der Dispersion, Stearyldimethylbenzylammoniumchlorid (SDMBAC) zugesetzt und gut eingemischt, wonach die resultierende kationische und erfindungsgemäß biozide Dispersion eine Kationenaktivität von 31 µmol/g FS, gemessen bei pH 7, besitzt. Der pH-Wert der Dispersion liegt bei 3,2.

**Beispiel 3**

Beispiel 1 wird wiederholt mit der Abänderung, daß anstelle von 4.88 g LPC 4.88 g Stearyldimethylbenzylammoniumchlorid (SDMBAC) als Emulgator eingesetzt werden. Die physikalisch-chemischen Kennzahlen der resultierenden und erfindungsgemäß bioziden Dispersion sind im wesentlichen identisch mit denen des Beispiels 1. Der pH-Wert der Dispersion liegt bei 3.2. Die Kationenaktivität beträgt 17 µmol g FS.

**Beispiel 4**

Beispiel 1 wird wiederholt mit der Abänderung, daß anstelle von 4.88 g LPC 4.88 g Didecyldimethylammoniumchlorid (DDDMAC) als Emulgator eingesetzt werden. Die physikalisch-chemischen Kennzahlen der resultierenden und erfindungsgemäß bioziden Dispersion sind im wesentlichen identisch mit denen des Beispiels 1. Die Kationenaktivität beträgt 35 µmol/g FS. Der pH-Wert der Dispersion liegt bei 3,1.

**Beispiel 5**

Beispiel 2 wird wiederholt mit der Abänderung, daß der erhaltenen kationischen Ausgangsdispersion anstelle von 1 Gew.-% SDMBAC 1 Gew.-%, bezogen auf den FS-Gehalt der Dispersion, Didecyldimethylammoniumchlorid (DDDMAC) zugesetzt und gut eingemischt werden. Die physikalisch-chemischen Kennzahlen der resultierenden und erfindungsgemäß bioziden Dispersion sind im wesentlichen identisch mit denen des Beispiels 2. Der pH-Wert der Dispersion liegt bei 3,1. Die Kationenaktivität beträgt 36 µmol g FS.

**Beispiel 6**

Beispiel 2 wird wiederholt mit der Abänderung, daß der erhaltenen kationischen Ausgangsdispersion anstelle von 1 Gew.-% SDMBAC 1 Gew.-%, bezogen auf den FS-Gehalt der Dispersion, Laurylpyridiniumchlorid (LPC) zugesetzt und gut eingemischt werden. Die physikalisch-chemischen Kenndaten der resultierenden und erfindungsgemäß bioziden Dispersion sind im wesentlichen identisch mit denen des Beispiels 2. Die Kationenaktivität beträgt 22 µmol/g FS. Der pH-Wert der Dispersion liegt bei 3,1.

**Vergleichsbeispiel 1**

Als Vergleich wird eine übliche anionische feinteilige Polymerisatdispersion, hergestellt nach DE-PS 25 31 895, Beispiel 1, mit 34,6 Gew.-% FS, einem mittleren Teilchendurchmesser von 0,047 µm und ohne Gehalt an kationischem biozidem Wirkstoff für die nachstehend beschriebenen vergleichenden Prüfungen verwendet. Die Dispersion wird mit wäßrigem Ammoniak auf pH 8 eingestellt.

**Anwendungsprüfungen**

Eine Beurteilung der erfindungsgemäßen Dispersionen auf ihre biozide Wirksamkeit kann in der Weise erfolgen, daß man Proben aus getrocknetem üblichem Fassadenputz auf Kunststoffdispersionsbasis sowie Proben aus getrockneter üblicher Anstrichfarbe auf Kunststoffdispersionsbasis vergleichsweise mit jeweils einer der erfindungsgemäßen bioziden Dispersionen der Beispiele 1 bis 6 bzw. als Vergleich mit der nicht erfindungsgemäßen Dispersion des Vergleichsbeispiels 1 grundiert, die Proben nach dem Trocknen auf mikrobiell infizierte Agar-Agar-Nährböden legt und die biozide Wirksamkeit, insbesondere gegen Pilze und Algen, beobachtet. Im einzelnen kann dabei wie folgt verfahren werden.

Papierrundfilter von 5,5 cm Durchmesser werden mit einer Fassadenputzzubereitung (Kratzputz), die gemäß der nachstehend aufgeführten Fassadenputzrezeptur 1 ohne die Mitverwendung von Konservierungsmitteln hergestellt worden ist, ca. 3 mm dick beschichtet und die beschichteten Prüfkörper 14 Tage bei Raumtemperatur an der Luft getrocknet.

In analoger Weise wie bei der Fassadenputzprüfkörperherstellung werden Papierrundfilter von 5,5 cm Durchmesser mit einer Dispersionsfarbe, die gemäß der nachstehend aufgeführten Dispersionsfarbenrezeptur 1 ohne die Mitverwendung von Konservierungsmitteln hergestellt worden ist, ca. 0.3 mm dick beschichtet und die beschichteten Prüfkörper 14 Tage bei Raumtemperatur an der Luft getrocknet.

Die getrockneten Fassadenputz-bzw. Anstrichprüfkörper werden anschließend durch Naßauftrag einer mit Wasser 1:1 verdünnten erfindungsgemäßen bioziden Dispersion der Beispiele 1 bis 6 bzw. der nicht erfindungsgemäßen Dispersion des Vergleichsbeispiels 1 grundiert und die grundierten Prüfkörper erneut 14 Tage bei Raumtemperatur an der Luft getrocknet. Mit den solchermaßen behandelten und getrockneten Prüfkörpern werden die nachstehend beschriebenen biologischen Hemmtests auf entsprechend mikrobiell infizierten Agar-Agar-Nährböden durchgeführt.

**Fassadenputzrezeptur 1**

Weißer Fassadenputz*) (Kratzputz) auf Kunststoffdispersionsbasis für Außen- und Innenanwendung

| Bestandteile | Gewichtsteile |
|---|---|
| Wäßrige Copolymerisatdispersion auf Basis Vinylacetat/Vinylversaticester 70/30, 50 Gew.-% Feststoffgehalt | 180,0 |
| Ammoniak konz. (25 gew.-%ig, wäßrig) | 0,5 |
| 2 gew.-%ige wäßrige Lösung von Methylhydroxyethylcellulose (Tylose MH 6000 K) | 30,0 |
| 10 gew.-%ige wäßrige Polyphosphatlösung (Calgon N) | 2,0 |
| Entschäumer (Nopco 8034) | 2,0 |
| Titandioxidpulver (Kronos RNCX) | 45,0 |
| Calciumcarbonat, bestehend aus | |
| Omya Durcal, 40 µm Korngröße | 150,0 |
| Omya Durcal, 130 µm Korngröße | 170,0 |
| Omya Granicalcium, 0,35-0,7 mm Korngröße | 100,0 |
| Omya Granicalcium, 1-2 mm Korngröße | 300,0 |
| Testbenzin | 12,5 |
| Butyldiglykolacetat | 3,0 |
| Dibutylphthalat | 3,0 |

*)
Die Rezepturbestandteile werden in der üblichen Reihenfolge gleichmäßig zu einer anwendungsfertigen Fassadenputzzubereitung vermischt und zur Herstellung der benötigten Prüfkörper unmittelbar auf Papierrundfilter aufgetragen.

**Dispersionsfarbenrezeptur 1**

Wäßrige Dispersionsfarbe*) für Außen- und Innenanwendung

| Bestandteile | Gewichtsteile |
|---|---|
| Wäßrige Copolymerisatdispersion auf Basis Vinylacetat/Vinylversaticester 70/30, 50 Gew.-% Feststoffgehalt | 340,0 |
| Ammoniak konz. (25 gew.-%ig, wäßrig) | 1,0 |
| 2 gew.-%ige wäßrige Lösung von Methylhydroxyethylcellulose (Tylose MH 2000 K) | 85,0 |
| 10 gew.-%ige wäßrige Polyphosphatlösung (Calgon N) | 7,0 |
| Entschäumer (Nopco 8034) | 3,5 |
| Titandioxidpulver (Kronos RNCX) | 135,0 |
| Calciumcarbonat, bestehend aus | |
| Omya Durcal, 5 µm Korngröße | 114,0 |
| Omya Calibrite SL | 170,0 |
| Aluminiumsilikat (China Clay B) | 40,0 |
| Magnesiumsilikat (Micro-Talc A.T.1) | 17,0 |
| Wasser | 63,0 |
| Testbenzin | 12,0 |
| Butyldiglykolacetat | 5,0 |
| Dibutylphthalat | 5,0 |

*) Die Rezepturbestandteile werden in der üblichen Reihenfolge gleichmäßig zu einer anwendungsfertigen Dispersionsfarbe vermischt und zur Herstellung der benötigten Prüfkörper unmittelbar auf Papierrundfilter aufgetragen.

**Biologischer Hemmtest**

Die vorstehend beschriebenen grundierten und getrockneten Prüfkörper werden mittels UV-Licht keimfrei gemacht und in Petrischalen auf Agar-Agar-Nährböden aufgelegt, die mit Pilzen (Aspergillus Niger) bzw. mit Algen (Chlorella Pyrenoidosa) beimpft worden sind.

Die mit Pilzen beimpften Proben werden im Brutschrank bei 29°C und 70 % rel. Luftfeuchte 8 Tage gelagert und das Pilzwachstum anschließend nach folgender Bewertungsskala 1 bis 4 beurteilt:

1 = Prüfkörper nicht bewachsen; keine Hemmzone im Agar-Agar
2 = Prüfkörper gering bewachsen (unter 10 %)
3 = Prüfkörper deutlich bewachsen (unter 30 %)
4 = Prüfkörper stark bewachsen (über 30 %).

Die mit Algen beimpften Proben werden bei Raumtemperatur (20°C) auf einem Labortisch unter künstlicher Belichtung (zur Aktivierung der Photosynthese) 14 Tage stehen gelassen und das Algenwachstum anschließend nach folgender Bewertungsskala 0 bis 4 beurteilt:

0 = Prüfkörper nicht bewachsen
1 = Prüfkörper gering bewachsen
2 = Prüfkörper deutlich bewachsen
3 = Prüfkörper stark bewachsen
4 = Prüfkörper sehr stark bewachsen.

In einem weiteren Test werden die weiter oben beschriebenen grundierten und getrockneten Prüfkörper zunächst 24 Stunden in fließendem Wasser gewässert, anschließend erneut getrocknet, mittels UV-Licht keimfrei gemacht und in Petrischalen auf Agar-Agar-Nährböden aufgelegt, die mit Pilzen (Aspergillus Niger) bzw. mit Algen (Chlorella Pyrenoidosa) beimpft worden sind. Die Bebrütung und anschließende Beurteilung der Proben in den Petrischalen erfolgt in analoger Weise wie vorstehend bei den nicht gewässerten Proben beschrieben.

Die Ergebnisse sind in der Tabelle 1 zusammengefaßt wiedergegeben. Es ist dabei insbesondere bemerkenswert, daß die erfindungsgemäß konservierten Proben durch Wässerung ihre pilzhemmende Wirkung praktisch nicht einbüßen und außerdem vergleichsweise zu Proben, die mit üblichen Dispersionen gemäß dem Vergleichsbeispiel 1 grundiert worden sind, ein unerwartet gutes Hemmverhalten zeigen.

**Tabelle 1:**

Biologischer Hemmtest an erfindungsgemäß konservierten Fassadenputz- und Dispersionsfarben-Prüfkörpern.

| Fassadenputzprüfkörper (F) bzw. Dispersionsfarbenprüfkörper (D), grundiert mit Dispersion aus Beispiel Nr. 1 bis 6 bzw. Vergleichsbeispiel 1 | Bewertung der infizierten und bebrüteten Proben (Pilze: 1 = kein Bewuchs, 4 = starker Bewuchs; Algen: 0 = kein Bewuchs, 4 = starker Bewuchs) a) Nicht gewässerte Prüfkörper b) Gewässerte Prüfkörper | | | |
|---|---|---|---|---|
| | Pilze | | Algen | |
| | a) | b) | a) | b) |
| Beispiel 1 (F) | 2 | 1 | 0 | 0 |
| Beispiel 1 (D) | 2 | 1 | 0 | 0 |
| Beispiel 2 (F) | | | 0 | 3 |
| Beispiel 2 (D) | | | 0 | 3 |
| Beispiel 3 (F) | 1 | 1 | 0 | 3 |
| Beispiel 3 (D) | 1 | 1 | 0 | 3 |
| Beispiel 4 (F) | 1 | 1 | 0 | 2 |
| Beispiel 4 (D) | 1 | 1 | 0 | 2 |
| Beispiel 5 (F) | | | 0 | 1 |
| Beispiel 5 (D) | | | 0 | 1 |
| Beispiel 6 (F) | 3 | 4 | 0 | 2 |
| Beispiel 6 (D) | 3 | 4 | 0 | 2 |
| Vergleichsbeispiel 1 (F) | 4 | 4 | 0 | 4 |
| Vergleichsbeispiel 1 (D) | 4 | 4 | 0 | 4 |

**Ansprüche**

1. Verwendung von feinteiligen wäßrigen kationischen Kunststoffdispersionen als biozide Ausrüstungsmittel für mikrobengefährdete Substrate, dadurch gekennzeichnet, daß die Kunststoffdispersionen kationische Dispersionen sind, die biozide kationisch-tensioaktive quaternäre organische Ammoniumverbindungen enthalten.

2. Ausführungsform nach Anspruch 1, dadurch gekennzeichnet, daß die kationischen Kunststoffdispersionen biozide kationisch-tensioaktive quaternäre organische Ammoniumverbindungen der Formel (I) und/oder (II),

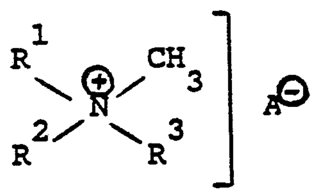 (I) ; 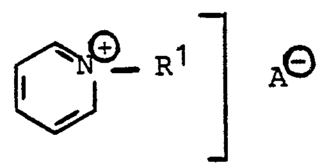 (II)

worin

$R^1$ = $(C_8-C_{18})$-Alkyl oder -Alkenyl,

$R^2$ = $(C_8-C_{18})$-Alkyl oder -Alkenyl, Aryl, $(C_7-C_{18})$-Aralkyl, wobei die aromatischen Ringe zusätzlich substituiert sein können, vorzugsweise durch Chlor und/oder Brom,

$R^3$ = $(C_1-C_4)$-Alkyl, vorzugsweise Methyl, oder den Rest $-(CH_2-CHR^4O)_n-R^5$, worin n eine Zahl von 1-20, $R^4$, $R^5$ die gleich oder verschieden sein können, H und/oder $(C_1-C_4)$-Alkyl, $R^4$ vorzugsweise H oder Methyl und $R^5$ vorzugsweise H bedeuten, und

A = ein Anion einer organischen oder anorganischen Säure bedeutet,

enthalten.

3. Ausführungsform nach Anspruch 1 und/oder 2, dadurch gekennzeichnet, daß die bioziden kationischen Kunststoffdispersionen als Ausrüstungsmittel für den Holzschutz, für Dispersionsanstriche, für Kunststoffputze bzw. Kunstharzputze und/oder zur Herstellung von Holzschutzmitteln, Dispersionsanstrichmitteln, Kunststoffputzen bzw. Kunstharzputzen verwendet werden.

4. Ausführungsform nach einem oder mehreren der Ansprüche 1 bis 3, dadurch gekennzeichnet, daß die bioziden kationischen Kunststoffdispersionen 0,1 bis 20 Gew.-%, vorzugsweise 0,1 bis 10 Gew.-%, insbesondere 0,1 bis 3 Gew.-%, bezogen auf das Dispersionspolymerisat, einer oder mehrerer biozider kationisch-tensioaktiver quaternärer organischer Ammoniumverbindungen, vorzugsweise Verbindungen der Formel (I) und/oder (II), enthalten.

5. Ausführungsform nach einem oder mehreren der Ansprüche 1 bis 4, dadurch gekennzeichnet, daß der mittlere Teilchendurchmesser des Dispersionspolymerisats in den Dispersionen 0,02 bis 0,5 µm, vorzugsweise 0,05 bis 0,2 µm, insbesondere 0,08 bis 0,15 µm, beträgt.

6. Ausführungsform nach einem oder mehreren der Ansprüche 1 bis 5, dadurch gekennzeichnet, daß der Feststoffgehalt der bioziden kationischen Kunststoffdispersionen 3 bis 40 Gew.-%, vorzugsweise 5 bis 20 Gew.-%, bezogen auf die Dispersion, beträgt.

7. Ausführungsform nach einem oder mehreren der Ansprüche 1 bis 6, dadurch gekennzeichnet, daß die bioziden kationischen Kunststoffdispersionen eine Kationenaktivität von 1,5 bis 600 µmol/g Feststoff, vorzugsweise 10 bis 300 µmol/g Feststoff, gemessen bei pH 7, besitzen.

8. Ausführungsform nach Anspruch 7, dadurch gekennzeichnet, daß 5 bis 95 % der Gesamtkationenaktivität auf biozide kationisch-tensioaktive quaternäre organische Ammoniumverbindungen, vorzugsweise biozide Verbindungen der Formel (I) und/oder (II), entfallen.

9. Ausführungsform nach einem oder mehreren der Ansprüche 1 bis 8, dadurch gekennzeichnet, daß die bioziden kationischen Kunststoffdispersionen Dispersionspolymerisate enthalten, deren Makromoleküle Monomereinheiten (berechnet in Gew.-%, bezogen auf das Polymerisat) aus folgenden Monomergruppen einpolymerisiert enthalten:

a) 80-99 Gew.-% ethylenisch ungesättigte Monomere aus der Gruppe Vinylester, (Meth-)Acrylester, Vinylaromaten, Vinylchlorid, Ethylen, (Meth-)Acrylnitril, Diester von Maleinsäure und/oder Fumarsäure, und

b) 1-20 Gew.-% ethylenisch ungesättigte hydrophile Monomere mit einer oder mehreren funktionellen Gruppen wie -OH, -COOH, $-CONR^1N^2$, wobei $R^1$ und $R^2$ gleich oder verschieden sein können und für H oder $-CH_2OR$ mit R = H oder $(C_1-C_8)$-Alkyl stehen.

10. Ausführungsform nach einem oder mehreren oder Ansprüche 1 bis 8, dadurch gekennzeichnet, daß die bioziden kationischen Kunststoffdispersionen Dispersionspolymerisate enthalten, die in Abwesenheit von kationisch-tensioaktiven bioziden Verbindungen, insbesondere von bioziden Verbindungen der Formel (I) und/oder (II), wobei Formel (I) und (II) die Bedeutung wie in Anspruch 2 haben, durch Emulsionspolymerisation hergestellt worden sind und deren Makromoleküle Monomereinheiten (berechnet in Gew.-%, bezogen auf das Polymerisat) aus folgenden Monomergruppen einpolymerisiert enthalten:

a) 80-99,5 Gew.-% ethylenisch ungesättigte Monomere aus der Gruppe Vinylester, (Meth-)Acrylester, Vinylaromaten, Vinylchlorid, Ethylen, (Meth-)Acrylnitril, Diester von Maleinsäure und/oder Fumarsäure,

b) 0-19,5 Gew.-% ethylenisch ungesättigte hydrophile Monomere mit einer oder mehreren funktionellen Gruppen wie -OH, -COOH, $-CONR^1R^2$, wobei $R^1$ und $R^2$ gleich oder verschieden sein können und für H oder $-CH_2OR$ mit R = H oder $(C_1-C_8)$-Alkyl stehen, und

c) 0,5-20 Gew.-% Amino-und/oder Ammoniumgruppen enthaltende ethylenisch ungesättigte Monomere, von denen mindestens 5 % eine quaternäre Ammoniumgruppe enthalten.

11. Verfahren zur bioziden Ausrüstung von mikrobengefährdeten Substraten durch Beschichten, Grundieren, Binden oder Verfestigen dieser Substrate mit einer Kunststoffdispersion, dadurch gekennzeichnet, daß man die Substrate mit bioziden, kationischen Kunststoffdispersionen nach einem oder mehreren der Ansprüche 1 bis 10 oder diese Dispersionen enthaltenden Mitteln behandelt.

12. Verfahren nach Anspruch 11, dadurch gekennzeichnet, daß man Holz, Dispersionsanstriche und Kunstharzputze bzw. Kunststoffputze behandelt.

13. Verfahren nach Anspruch 11 und/oder 12, dadurch gekennzeichnet, daß man die Substrate mit bioziden Holzschutzmitteln, Dispersionsfarben oder Kunststoffputzen bzw. Kunstharzputzen, welche unter Mitverwendung von bioziden, kationischen Kunststoffdispersionen nach einem oder mehreren der Ansprüche 1 bis 10 hergestellt worden sind, behandelt.

14. Verfahren zur bioziden Ausrüstung von mikrobengefährdeten Substraten nach einem oder mehreren der Ansprüche 11 bis 13, dadurch gekennzeichnet, daß man die Substrate fungizid, bakterizid und/oder algizid ausrüstet.

Patentansprüche für den folgenden Vertragsstaat: ES

1. Verfahren zur bioziden Ausrüstung von mikrobengefährdeten Substraten durch Beschichten, Grundieren, Binden oder Verfestigen dieser Substrate mit einer Kunststoffdispersion, dadurch gekennzeichnet, daß man die Substrate mit feinteiligen, wäßrigen, bioziden, kationischen Kunststoffdispersionen, die biozide kationisch-tensioaktive quaternäre organische Ammoniumverbindungen enthalten, oder mit Mitteln, welche diese Dispersionen enthalten, behandelt.

2. Verfahren nach Anspruch 1, dadurch gekennzeichnet, daß man Holz, Dispersionsanstriche und Kunstharzputze bzw. Kunststoffputze behandelt.

3. Verfahren nach Anspruch 1 und/oder 2, dadurch gekennzeichnet, daß man die Substrate mit bioziden Holzschutzmitteln, Dispersionsfarben oder Kunststoffputzen bzw. Kunstharzputzen, welche unter Mitverwendung der bioziden, kationischen Kunststoffdispersionen hergestellt worden sind, behandelt.

4. Verfahren zur bioziden Ausrüstung von mikrobengefährdeten Substraten nach einem oder mehreren der Ansprüche 1 bis 3, dadurch gekennzeichnet, daß man die Substrate fungizid, bakterizid und/oder algizid ausrüstet.

5. Ausführungsform nach einem oder mehreren der Ansprüche 1 bis 4, dadurch gekennzeichnet, daß die kationischen Kunststoffdispersionen biozide kationisch-tensioaktive quaternäre organische Ammoniumverbindungen der Formel (I) und/oder (II),

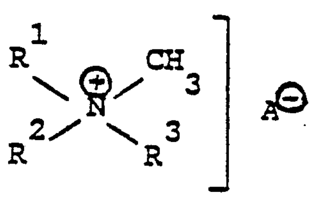 (I) ; 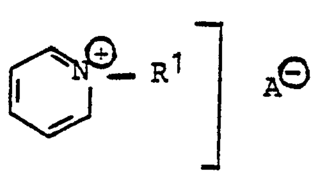 (II)

worin
$R^1$ = $(C_8-C_{18})$-Alkyl oder -Alkenyl,
$R^2$ = $(C_8-C_{18})$-Alkyl oder -Alkenyl, Aryl, $(C_7-C_{18})$-Aralkyl, wobei die aromatischen Ringe zusätzlich substituiert sein können, vorzugsweise durch Chlor und/oder Brom,

$R^3$ = $(C_1-C_4)$-Alkyl, vorzugsweise Methyl, oder den Rest $-(CH_2-CHR^4O)_n-R^5$, worin n eine Zahl von 1-20, $R^4$, $R^5$ die gleich oder verschieden sein können, H und/oder $(C_1-C_4)$-Alkyl, $R^4$ vorzugsweise H oder Methyl und $R^5$ vorzugsweise H bedeuten, und

A = ein Anion einer organischen oder anorganischen Säure bedeutet,

enthalten.

6. Ausführungsform nach einem oder mehreren der Ansprüche 1 bis 5, dadurch gekennzeichnet, daß man als Ausrüstungsmittel für den Holzschutz, für Dispersionsanstriche, für Kunststoffputze bzw. Kunstharzputze die bioziden kationischen Kunststoffdispersionen als solche und/oder als Bestandteil in Holzschutzmitteln, Dispersionsanstrichmitteln, Kunststoffputzen bzw. Kunstharzputzen einsetzt.

7. Ausführungsform nach einem oder mehreren der Ansprüche 1 bis 6, dadurch gekennzeichnet, daß die bioziden kationischen Kunststoffdispersionen 0,1 bis 20 Gew.-%, vorzugsweise 0,1 bis 10 Gew.-%, insbesondere 0,1 bis 3 Gew.-%, bezogen auf das Dispersionspolymerisat, einer oder mehrerer biozider kationisch-tensioaktiver quaternärer organischer Ammoniumverbindungen, vorzugsweise Verbindungen der Formel (I) und/oder (II), enthalten.

8. Ausführungsform nach einem oder mehreren der Ansprüche 1 bis 7, dadurch gekennzeichnet, daß der mittlere Teilchendurchmesser des Dispersionspolymerisats in den Dispersionen 0,02 bis 0,5 µm, vorzugsweise 0,05 bis 0,2 µm, insbesondere 0,08 bis 0,15 µm, beträgt.

9. Ausführungsform nach einem oder mehreren der Ansprüche 1 bis 8, dadurch gekennzeichnet, daß der Feststoffgehalt der bioziden kationischen Kunststoffdispersionen 3 bis 40 Gew.-%, vorzugsweise 5 bis 20 Gew.-%, bezogen auf die Dispersion, beträgt.

10. Ausführungsform nach einem oder mehreren der Ansprüche 1 bis 9, dadurch gekennzeichnet, daß die bioziden kationischen Kunststoffdispersionen eine Kationenaktivität von 1,5 bis 600 µmol/g Feststoff, vorzugsweise 10 bis 300 µmol/g Feststoff, gemessen bei pH 7, besitzen.

11. Ausführungsform nach Anspruch 10, dadurch gekennzeichnet, daß 5 bis 95 % der Gesamtkationenaktivität auf biozide kationisch-tensioaktive quaternäre organische Ammoniumverbindungen, vorzugsweise biozide Verbindungen der Formel (I) und/oder (II), entfallen.

12. Ausführungsform nach einem oder mehreren der Ansprüche 1 bis 11, dadurch gekennzeichnet, daß die bioziden kationischen Kunststoffdispersionen Dispersionspolymerisate enthalten, deren Makromoleküle Monomereinheiten (berechnet in Gew.-%, bezogen auf das Polymerisat) aus folgenden Monomergruppen einpolymerisiert enthalten:

a) 80-99 Gew.-% ethylenisch ungesättigte Monomere aus der Gruppe Vinylester, (Meth-)Acrylester, Vinylaromaten, Vinylchlorid, Ethylen,(Meth-)Acrylnitril, Diester von Maleinsäure und/oder Fumarsäure, und

b) 1-20 Gew.-% ethylenisch ungesättigte hydrophile Monomere mit einer oder mehreren funktionellen Gruppen wie -OH, -COOH, $-CONR^1R^2$, wobei $R^1$ und $R^2$ gleich oder verschieden sein können und für H oder $-CH_2OR$ mit R = H oder $(C_1-C_8)$-Alkyl stehen.

13. Ausführungsform nach einem oder mehreren der Ansprüche 1 bis 12, dadurch gekennzeichnet, daß die bioziden kationischen Kunststoffdispersionen Dispersionspolymerisate enthalten, die in Abwesenheit von kationisch-tensioaktiven bioziden Verbindungen, insbesondere von bioziden Verbindungen der Formel (I) und/oder (II), wobei Formel (I) und (II) die Bedeutung wie in Anspruch 5 haben, durch Emulsionspolymerisation hergestellt worden sind und deren Makromoleküle Monomereinheiten (berechnet in Gew.-%, bezogen auf das Polymerisat) aus folgenden Monomergruppen einpolymerisiert enthalten:

a) 80-99,5 Gew.-% ethylenisch ungesättigte Monomere aus der Gruppe Vinylester, (Meth-)Acrylester, Vinylaromaten, Vinylchlorid, Ethylen, (Meth-)Acrylnitril, Diester von Maleinsäure und/oder Fumarsäure,

b) 0-19,5 Gew.-% ethylenisch ungesättigte hydrophile Monomere mit einer oder mehreren funktionellen Gruppen wie -OH, -COOH, $-CONR^1R^2$, wobei $R^1$ und $R^2$ gleich oder verschieden sein können und für H oder $-CH_2OR$ mit R = H oder $(C_1-C_8)$-Alkyl stehen, und

c) 0,5-20 Gew.-% Amino-und/oder Ammoniumgruppen enthaltende ethylenisch ungesättigte Monomere, von denen mindestens 5 % eine quaternäre Ammoniumgruppe enthalten.